Europäisches Patentamt

European Patent Office

Office européen des brevets

(11) Publication number: **0 492 579 A2**

# EUROPEAN PATENT APPLICATION

(21) Application number: **91122117.4**

(22) Date of filing: **23.12.91**

(51) Int. Cl.⁵: **H04N 1/00, H04N 1/21**

(30) Priority: **25.12.90 JP 418247/90**

(43) Date of publication of application:
**01.07.92 Bulletin 92/27**

(84) Designated Contracting States:
**DE FR GB**

(71) Applicant: **Kabushiki Kaisha Toshiba**
**72, Horikawa-cho Saiwai-ku**
**Kawasaki-shi(JP)**

(72) Inventor: **Watanabe, Junji, c/o Intellectual**
**Property Div.**
**Kabushiki Kaisha Toshiba, 1-1 Shibaura**
**1-chome**
**Minato-ku, Tokyo 105(JP)**
Inventor: **Oushiden, Hideshi, c/o Intellectual**
**Property Div.**
**Kabushiki Kaisha Toshiba, 1-1 Shibaura**
**1-chome**
**Minato-ku, Tokyo 105(JP)**

(74) Representative: **Blumbach Weser Bergen**
**Kramer Zwirner Hoffmann Patentanwälte**
**Radeckestrasse 43**
**W-8000 München 60(DE)**

(54) **Image-processing system for recording an image in an IC card and for displaying the image by means of a display.**

(57) Disclosed herein is an image-processing system, wherein a copying machine (4) reads an image from an original, the data representing the image, thus read, is stored into the RAM (7) incorporated in an IC card (1), and a display (3) displays the image represented by the data stored in the IC card (1) detachably connected to the display (3). Although relatively inexpensive, the system can function as a document filing system which records and displays image data with high efficiency.

FIG. 1

This invention relates to an image-processing system which records an image in an IC card, said image having been read by an image-reading device or a copying machine, and which displays the recorded image by means of a display.

Documents piled on a desk can be discarded if the data on them is recorded, in retrievable form, in a floppy disk by operating a word processor. Similarly, drawings put on the desk can be discarded, provided that the images are read from them by an image-reading device and recorded, in retrievable form, in an optical disk by means of an optical filing system or the like.

However, it requires much cost to record images in an optical disk for two reasons. First, the optical filing system is very expensive. Secondly, much time must be spent to record images in an optical disk and to retrieve them therefrom.

Published Unexamined Japanese Patent Application No. 62-119555 discloses a copying machine which has in IC device and, of course, a copying section. In this machine, the IC card device records in an IC card the number of copies each person has made, and the copying section prints the data recorded in the IC card. Obviously, the IC card is used to record data showing how often the copying machine is used, not to record or file images in retrievable form.

An object of the present invention is to provide an inexpensive image-processing system which can record, retrieve and display images with much ease and, hence, at low cost.

Another object of this invention is to provide a display device which can easily display the images recorded in an IC card.

In a first aspect of the invention, there is provided an image-processing system comprising an original table for holding an original having an original image, means for forming a copy image on a transfer material, which corresponds to the original image, the forming means including means for electrically charging a photosensitive member uniformly, light applying means for applying light to the original held on the original table and for applying light reflected from the original to the photosensitive member to form a latent image thereon, developer applying means for applying a developer to the photosensitive member to develop the latent image, means for transferring the developed image onto the transfer material, and means for fixing the image transferred on the transfer material, means for storing image data, means for transducing the original image to the image data, means for writing the image data into the storing means, means for holding the storing means detachably, means for changing an operating mode, from a first mode in which the forming means forms the image on the transfer material to a second mode in which the writing means writes the image data into the storing means, and vice versa, an image forming body supporting the original table, the forming means, the transducing means, the writing means, the holding means, and the changing means, in the form of a single unit, means for reading the image data stored in the storing means, means for displaying an image represented by the image data read by the reading means, and a display body for portably supporting the reading means and the displaying means, in the form of a unit which is independent of the image forming body.

This invention can be more fully understood from the following detailed description when taken in conjunction with the accompanying drawings, in which:

Fig. 1 is a block diagram schematically showing an image-processing system according this invention;

Fig. 2 is a diagram illustrating the format in which data is stored in the RAM contained in the IC card shown in Fig. 1;

Figs. 3 and 4 are perspective views showing the image-reading device used in the image-processing system of Fig. 1;

Fig. 5 is a side view of the image-reading device;

Fig. 6 is a diagram showing the internal structure of the image-reading device;

Fig. 7 is a front view of the image-reading device;

Fig. 8 is a block diagram schematically showing the components of the image-reading device;

Fig. 9 is a flow chart explaining the operation of the image-reading device;

Fig. 10 is a perspective view of the display shown in Fig. 1;

Fig. 11 is a diagram showing the key pad of the display device;

Fig. 12 is a block diagram schematically showing the structure of the key pad;

Figs. 13A and 13B are a flow chart explaining the operation of the circuit for controlling the display shown in Fig. 1;

Fig. 14 is a cross-sectional side view of the copying machine shown in Fig. 1;

Fig. 15 is a diagram explaining how the image-reading device performs its function;

Fig. 16 is a diagram showing the operation panel of the copying machine;

Figs. 17 and 18 are perspective views of the top section of the copying machine, especially showing the IC card holder of the machine;

Fig. 19 is a block diagram showing the control circuit incorporated in the copying machine; and

Figs. 20 and 21 are a flow chart explaining the operation of the copying machine shown in Fig. 1.

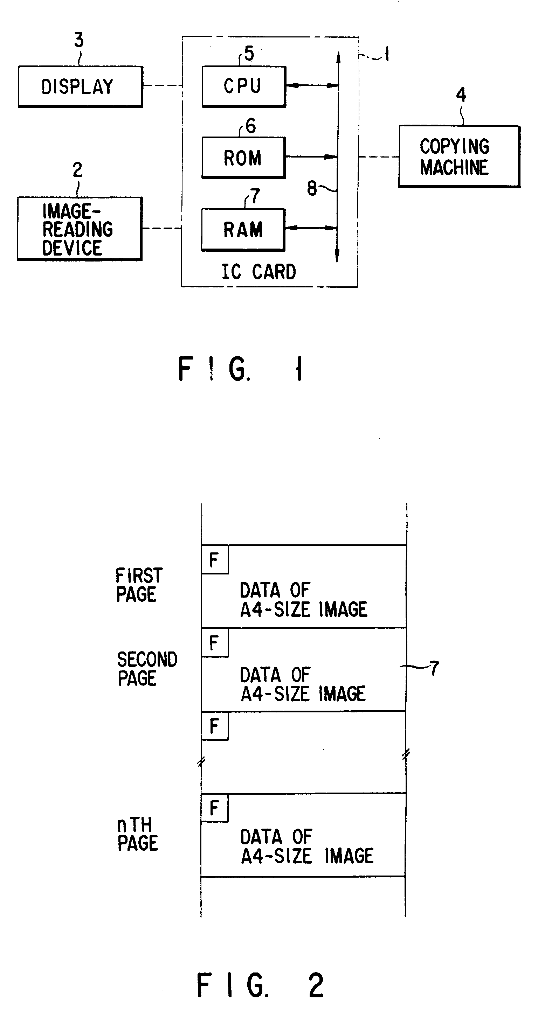

Fig. 1 schematically shows an image-processing system according to the present invention. As is shown in this figure, the image-processing system comprises an IC card 1 storing image data, an image-reading device 2 for reading image data from an original and records the data in the IC card 1, a display 3 for displaying the image data recorded in the IC card 1, and a copying machine 4 for performing ordinary copying, for reading image data from an original and recording the data in the IC card 1, and for printing the image data stored in the IC card 1.

The IC card 1 comprises a CPU 5, a ROM 6 storing a control program and the like, and a RAM 7 for storing units of image data. The CPU 5, the ROM 6, and the RAM 7 are connected by means of a bus 8. As is shown in Fig. 2, the RAM 7 has several storage areas, each for storing one A4-sized page of image data.

The storage areas have a flag F each. If set at the logic value of "1," the flag F indicates a boundary distinguishing two storage areas. If set at the logic value of "0," it indicates no such boundary. To store A3-sized page of image data into the IC card 1, the flat F in one of the storage area is set at "1," thereby defining two A4-sized storage areas, so that the halves of the A3-sized image data is stored in the two A4-sized storage areas thus defined.

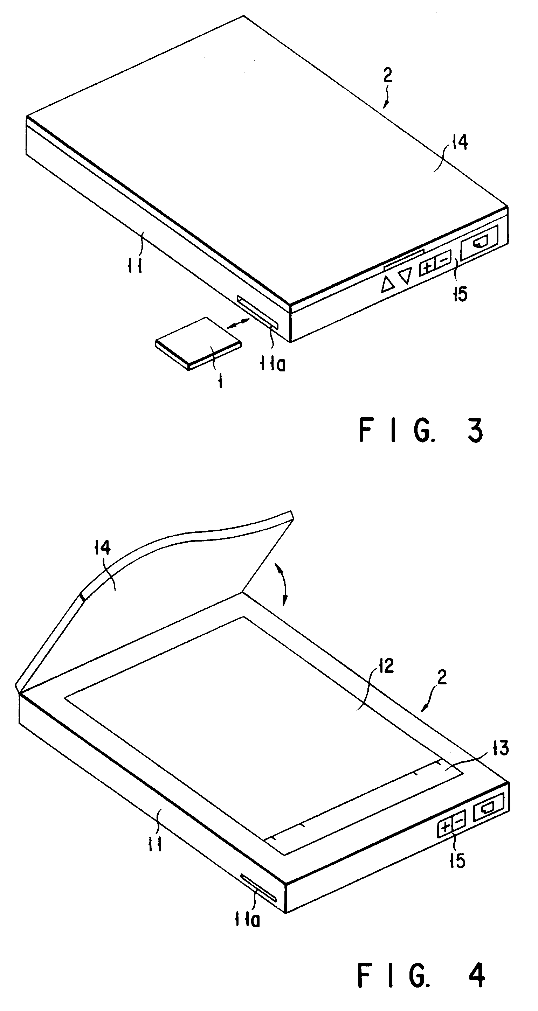

The image-reading device 2, which is a scanner, will be described, with reference to Figs. 3 and 4.

The device, or scanner, comprises a housing 11, a rectangular platen plate 12 made of transparent glass and located atop the housing 11, a scale 13 extending along one side of the platen plate 12, and an original cover 14 hinged to one end of the housing 11. The platen plate 12 is large enough to hold a A4-sized original. The scale 13 is used to measure the size of the original placed on the platen plate 12 and to position the original properly.

The housing 11 has an IC-card slot 11a. An operation panel 15 is mounted on one side of the housing 11. The panel 15 has a display (not shown) and keys. The display displays the operating conditions of the scanner which have been preset. Among the keys is a read-start switch (not shown, either).

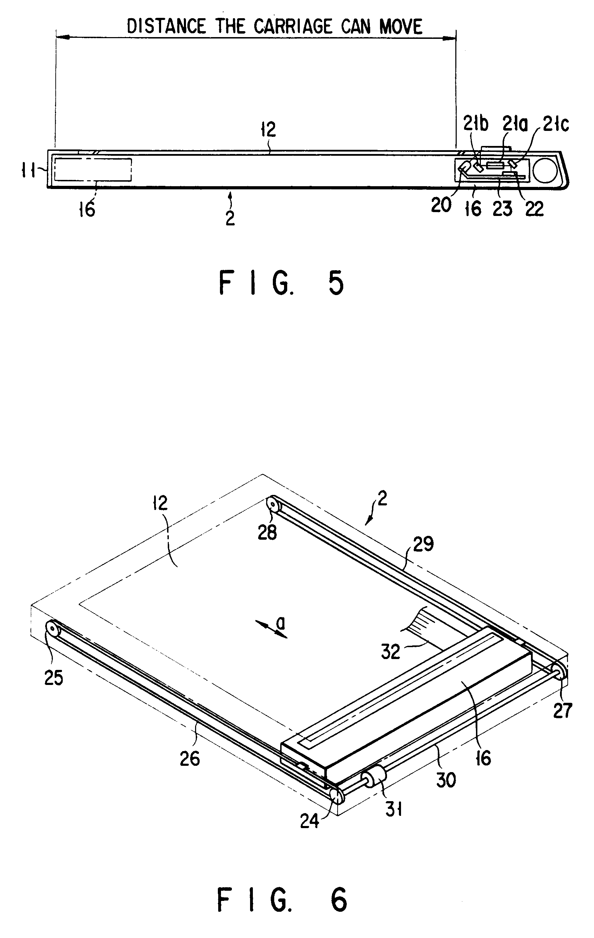

As is shown in Figs. 5, 6 and 7, the housing 11 contains an original-scanning section 16, which is located right below the platen plate 12. The section 16 can move back and forth, in parallel to the platen plate 12. As the section 16 moves in the direction of arrow a (Fig. 6), it optically scans the original placed on the platen plate 12. As is best shown in Fig. 5, the original-scanning section 16 comprises an illumination lamp 20 (e.g., a fluorescent lamp), a focusing lens 21a, two mirrors 21b and 21c, a photoelectric transducer 22, and a carriage 23. The carriage 23 supports the other components of the original-scanning section 16.

In operation, the lamp 20 applies light to the original placed on the platen plate 12, thus illuminating the original. The light beam reflected by the original is applied to the mirror 21b. The mirror 21b reflects the light beam, supplying the light beam to the lens 21a. The lens 21a focuses the light beam. The light beam is supplied to the mirror 21c. The mirror 21c reflects the light beam, thereby applying the beam to the photoelectric transducer 22.

The photoelectric transducer 22 is designed to convert input light beams into electric signals which represent the image formed on the original. Its main component is, for example, a CCD line image sensor.

As is best shown in Fig. 6, the carriage 23 can be moved back and forth in directions of arrow a, by means of a drive unit. The drive unit comprise two drive pulleys 24 and 27, two driven pulleys 25 and 28, two guide belts 26 and 29, and an electric motor 31. The drive pulleys 24 and 27 are connected to the ends of the shaft of the motor 31. The belt 26 is wrapped around the drive pulley 24 and the driven pulley 25. The belt 29 is wrapped around the drive pulley 27 and the driven pulley 28. The motor 31 is, for example, a stepping motor. When the motor 31 rotates in the forward direction, the drive pulleys 24 and 27 rotate in one direction. The belts 26 and 29 are thereby driven in a forward direction, and the carriage 23, which is connected to both belts, is moved in the forward direction. When the motor 31 rotates in the reverse direction, the pulleys 24 and 27 rotate in the opposite direction. In this case, the belts 26 and 29 are driven in the reverse direction, and the carriage 23 is moved in the backward direction.

The illumination lamp 20, the photoelectric transducer 22, the electric motor 31 are incorporated in the carriage 23. They are electrically connected by a flat cable 32 to a control circuit.

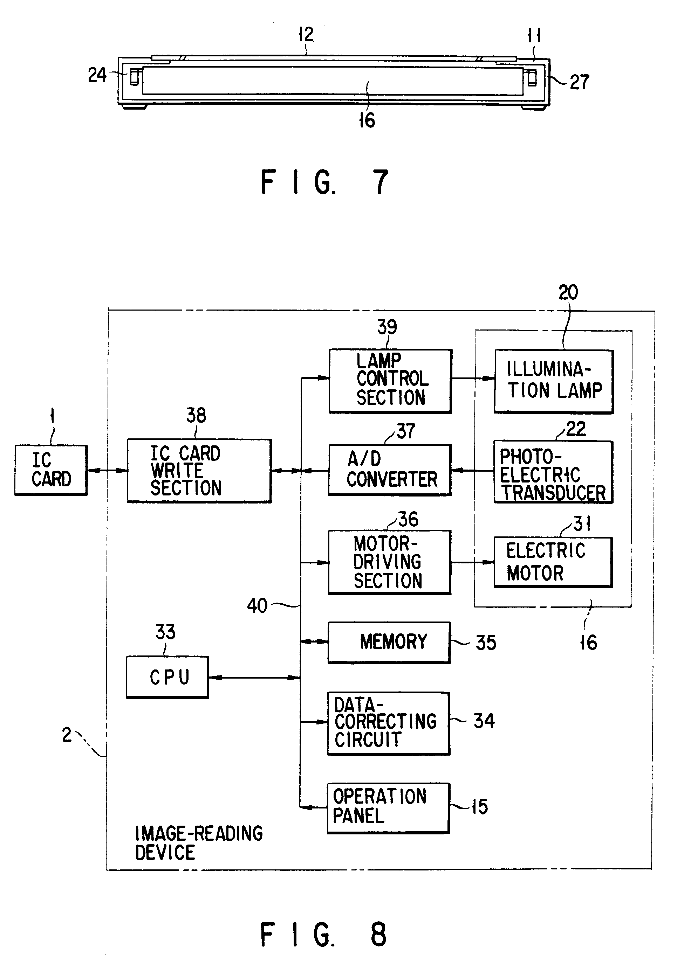

The image-reading device 2, which is one of the components of the image-processing system, will be described, with reference to Fig. 8. As is evident from Fig. 8, the image-reading device 2 has the operation panel 15, and further comprises a CPU 33, a data-correcting circuit 34, a memory 35, a motor-driving section 36, an A/D converter 37, an IC card write section 38, a lamp control section 39, and a bus 40. The components 15 and 33 to 39 are connected to the bus 40, and are thereby electrically connected to one another.

The data-correcting circuit 34 corrects the image data, i.e., the digital data generated from the light reflected from the original, in accordance with the reflection reference data stored in the memory 35. More precisely, the circuit 34 performs shading correction on the data output by the photoelectric transducer 22, thereby eliminating the error resulting from the changes in the sensitivity of the photoelectric transducer 22. The image data, thus corrected, is supplied to the IC card write section 38 and subsequently written into the IC card 1 inserted in the section 38.

The reflection reference data stored in the memory 35 is the data obtained by correcting, by the data-correcting circuit 34, the digital data generated from the light reflected from a reference reflector (not shown). The memory 35 is used to store the image data corrected by the data-correcting circuit 34.

The motor-driving section 36 is connected to the electric motor 31, for rotating the motor 31. The A/D converter 37 is connected to the the photoelectric transducer 22, for converting the electric signals output by the transducer 22 into digital signals. The lamp control section 39 is connected to the illumination lamp 20, for turning the lamp 20 on and off and controlling the amount of light the lamp 20 is to emit. Of the digital signals output by the A/D converter 37, those which represent the image formed on the original are input to the data-correction circuit 34. The remaining digital signals are input to the memory 35 or the lamp control section 39.

The IC card write section 38 is designed to supply the corrected image data stored in the memory 35 to the CPU 5 incorporated in the IC cared 1. In the IC card 1, the CPU 5 writes the image data into the RAM 7.

According to the present invention, a detector (not shown) can be provided in the IC-card slot 11a, for detecting the insertion of the IC card into the slot 11a.

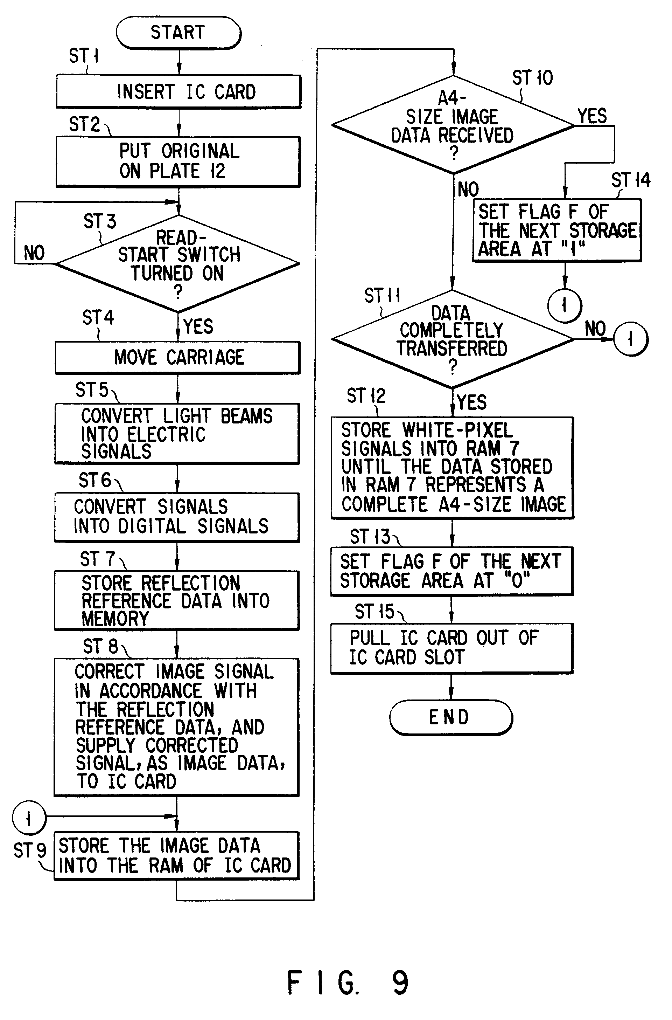

With reference to the flow chart of Fig. 9, it will now be described how the image-reading device 2 described above performs its function.

First, in step ST1, an user inserts the IC card into the IC-card slot 11a. Then, in step ST2, he or she puts an original on the platen plate 12. In step ST3, the CPU 33 determines whether or not the user has turned on the read-start switch of the operation panel 15. If NO, the flow returns to step ST3. If YES, the flow goes to step ST4. In step ST4, the CPU 33 turns on the lamp 20 and drives the electric motor 31, whereby the carriage 23 is moved in parallel to the platen plate 12. As the carriage 23 moves so, the light emitted from the lamp 20 is applied to the original and the reference reflector (not shown) through the platen plate 12.

In step ST4, the mirror 21b, the focusing lens 21a, and the mirror 21c guides the light beams from the original and the reference reflector to the photoelectric transducer 22. The transducer 22 converts the light beams into electric signals. In the next step ST5, these signals are input to the A/D converter 37. In step ST6, the A/D converter 37 converts the electric signals (i.e., analog signals) into digital signals.

Next, in step ST7, the digital signal output by the A/D converter and representing the intensity of the light beam reflected from the reference reflector is stored, as reflection reference data, into the memory 35. In step ST8, the data-correcting circuit 34 corrects the digital image signal in accordance with the reflection reference data stored in the memory 35, and the image signal, thus corrected, is supplied via the IC-card write section 38 to the CPU 5 incorporated in the IC card.

At this time, the CPU 33 supplies a write request to the CPU 5 through the IC-card write section 38. The CPU 5 thereby writes the image data stored in the IC cared 1 into the RAM 7, in step ST9. In other words, the CPU 5 is set into write mode in response to the write request supplied from the CPU 33, and writes the image data into the RAM 7.

Then, in step ST10, the CPU 5 determines whether or not the image data stored in the RAM 7 represents an image larger than an A4-size image. If NO, the flow goes to step ST11, in which the CPU 5 determines whether or not the data has been completely transferred from the IC-card write section 38. If NO, the flow returns to step ST9. If YES, the flow goes to step ST12. In step ST12, image signals representing white pixels are written into the RAM 7 until the image data stored in one of the A4-sized storage areas of the RAM 7 represents a complete A4-sized image. Then, in step ST13, the CPU 5 changes set the flag F of the next A4-sized storage area at the value of "0," whereby the flag F indicates that image data to be stored in the next storage area is not associated with the image data stored in the A4-sized storage area.

If YES in step ST10, that is, if the image data stored in the RAM 7 represents an A4-size image, the flow goes to step ST14. In step ST14, the CPU 5 sets the flag F of the next A4-sized storage area at the value of "1," whereby the flag F indicates that the image data to be stored in the next storage area is associated with the image data stored in the A4-sized storage area. Then, the flow returns to step ST9, in which the CPU 5 writes into the RAM 7 the image data stored in the IC cared 1 and associated with the image data already stored in the RAM 7. Thereafter, in step ST15, the user pulls the IC card 1 out of the IC-card slot 11a.

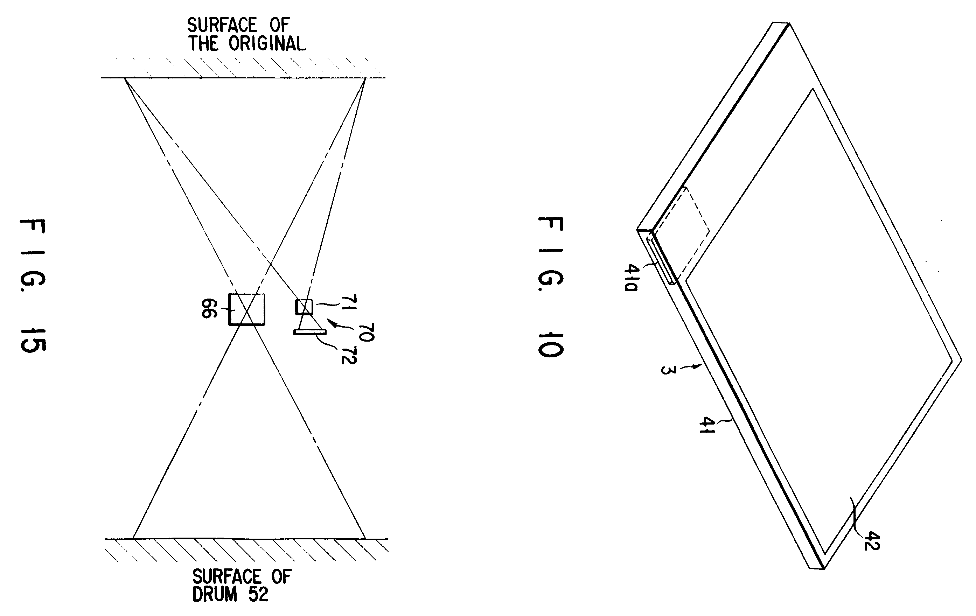

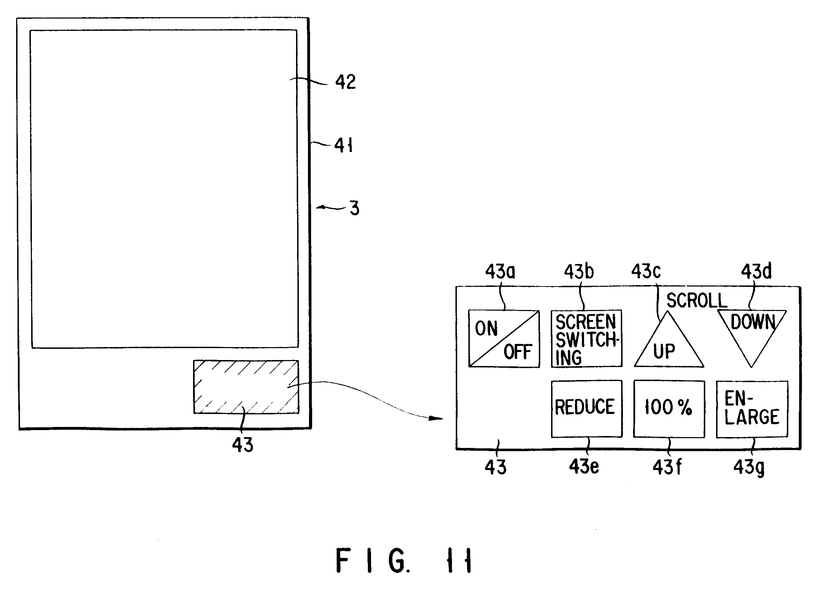

The display 3 will now be described, with reference to Figs. 10 and 11.

As is shown in Fig. 10, the display 3 is shaped like a rectangular plate. Its housing 41 has a width W of 320 mm or less, a height H of 250 mm or less, and a thickness of 1 inch or less. The display 3 can therefore be put on a desk, just like books and holders, not occupying a large space.

A liquid-crystal display panel 42 and an operation panel 43 are formed in the top surface of the housing 41. The operation panel 43 has a power switch 43a, a screen-switching key 43b, an UP key 43c, a DOWN key 34d, an image-reducing key 34e, a 100%-size key 43f, and an image-enlarging key 43g. The housing 41 has in one side a IC-card slot 41a though which to insert an IC card.

When the screen-switching key 43b is pushed after the power switch 43a has been turned on, the liquid-crystal panel 42 displays an A3-size screen and an A4-size screen alternately if the original placed on the platen plate 12 has a size larger than A3 size and, hence, much larger than A4 size. The image-reducing key 43e is pushed to reduce the image displayed. The image-enlarging key 43g is pushed to enlarge the image displayed. The 100%-size key 43f is pushed to change the size of the displayed image to the original size.

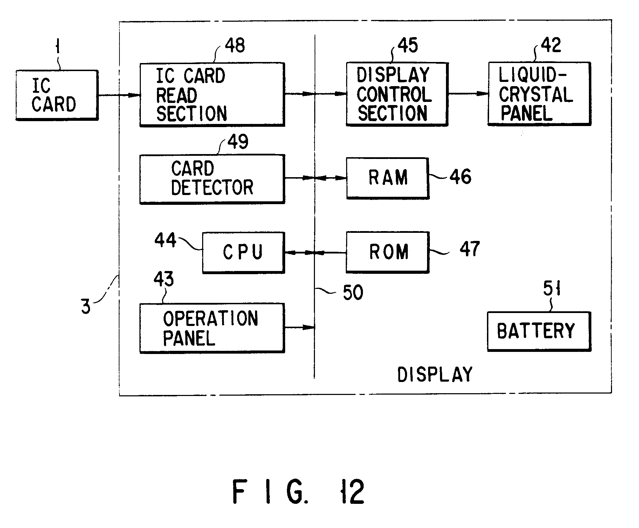

The display 3, which is one of the components of the image-processing system, will be described, with reference to Fig. 12. As is shown in Fig. 12, the display comprises, besides the liquid-crystal panel 42 and the operation panel 43, a CPU 44, a display control section 45, a ROM 47, an IC-card read section 48, a card detector 49, a bus 50, and a battery 51. The components 43, 44, 45, 46, 47, 48 and 49 are connected to the bus 50. The liquid-crystal panel 42 is connected to the display control section 45. The CPU 44 controls all other components of the display 3, but the panels 42 and 43 and the battery 51. The display control section 45 controls the liquid-crystal panel 42. The RAM 46 is used to store image data to display. The ROM 47 stores control programs. The IC-card read section 48 reads image data from the IC card 1 and write image data thereinto. The card detector 49 detects the IC card 1 inserted in the IC-card read section 48 through the IC-card slot 41a. The battery 51 supplies power to all other components of the display 3, except the operation panel 43.

The IC-card read section 48 reads the image data stored in the RAM 7 incorporated in the IC card 1 and stores it into the RAM 46. The image data is supplied from the RAM 46 via the bus 50 to the display control section 45. The section 45 controls the liquid-crystal panel 42, which displays the image represented by the image data. The card detector 49 is, for example, of the known type which comprises a light-emitting element and a light-receiving element and is designed to detect the IC card 1 optically.

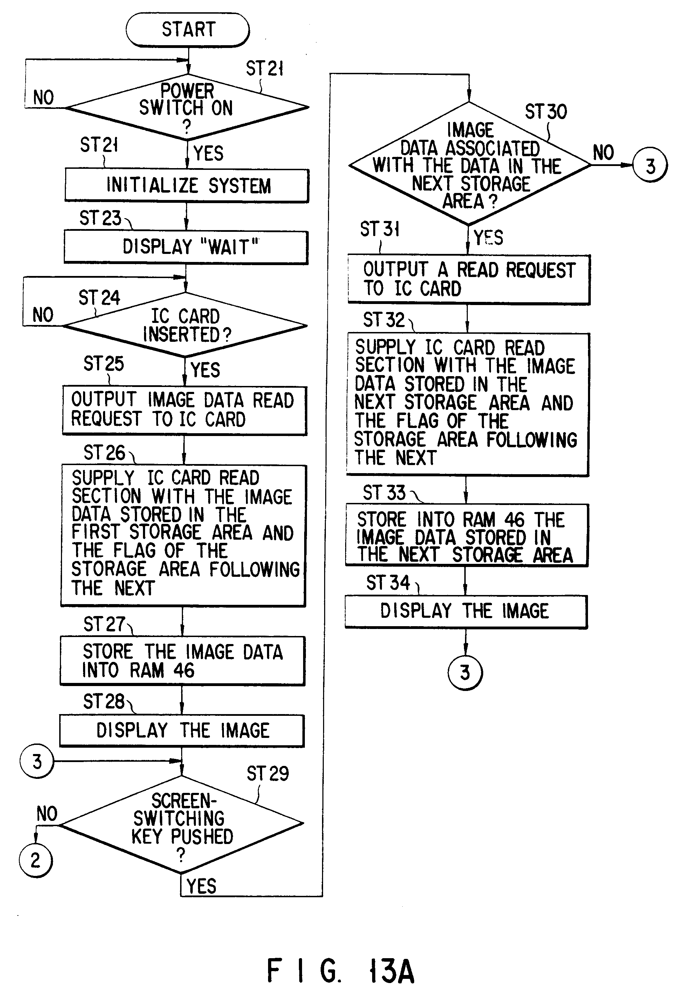

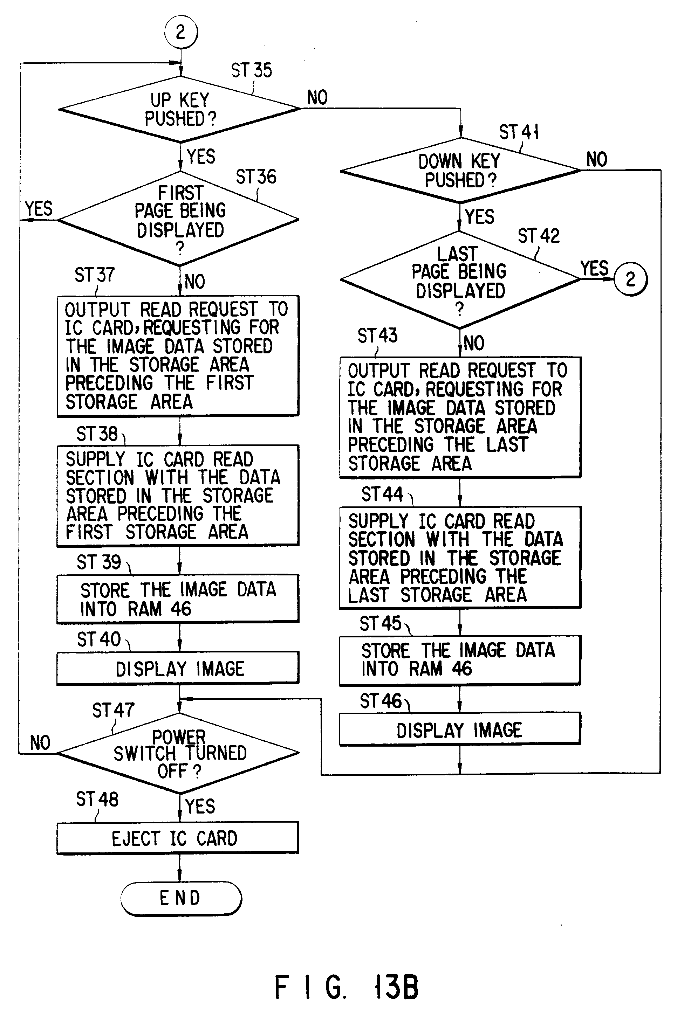

With reference to the flow chart of Figs. 13A and 13B, it will now be explained how the display 3 performs its function.

In step ST21, it is determined whether or not the power switch 43a has been turned on. If YES, the CPU 44 initializes all other components of the display 3, except the operation panel 43 and the battery 51, in step ST22. Then, in step ST23, the liquid-display panel 42 displays the message "WAIT." In step ST24, the CPU 44 determines whether or not the card detector 49 has detected the IC card 1 inserted into the IC-card read section 48 through the IC-card slot 41a.

If YES in step ST24, the flow goes to step ST25, in which the CPU 44 outputs a read request to the CPU 5 of the IC card 1 through the IC-card read section 48. The CPU 5 is thereby set into write mode in step ST26. Also in step ST26, the CPU 5 reads the image data stored in the first A4-sized storage area of the RAM 7 and also the flag F stored in the second A4-sized storage area of the RAM 7. The image data and the flag F, thus read, are supplied to the IC-card read section 48.

Next, in step ST27, the CPU 44 receives the image data and stores it into the RAM 46. In step ST28, the display control section 45 controls the liquid-crystal panel 42, whereby the panel 42 displays the image represented by the image data stored in the RAM 46. The panel 42 also displays the data showing that the image displayed is the first half of a single image, if the flag F indicates that the image data to be stored in the second A4-sized storage area is associated with the image data stored in the first A4-sized storage area.

Thereafter, in step ST29, the CPU 44 determines whether or not the screen-switching key 43b has been pushed. If YES, the flow goes to step ST30, in which the CPU 44 determines whether or not the image data to be stored in the second A4-sized storage area is associated with the image data stored in the first A4-sized storage area. If YES in step ST30, the CPU 44 outputs a read request to the CPU 5 of the IC card 1 through the IC-card read section 48, in step ST31. In response to the read request, the CPU 5 reads the image data stored in the next storage area of the RAM 7, and outputs this image data to the IC-card read section 48. Then, in step ST32, the CPU 44 receives the image data from the section 48. In step ST33, the CPU 44 stores the image data into the RAM 46. In step ST34, the liquid-crystal panel 42 displays the image represented by the image data stored in the RAM 46.

If NO in step ST29, that is, if the CPU 44 determines that the screen-switching key 43b has not been pushed, the flow goes to step ST35. In step ST35, the CPU 44 determines whether or not the UP key 43c has been pushed. If YES, the flow goes to step ST36, in which the CPU 44 determines whether or not the liquid-crystal panel 42 is displaying the image represented by the data stored in the first storage area of the RAM 7. If YES in step ST36, the flow returns to step ST35. If NO in step ST36, the flow goes to step ST37, in which the CPU 44 outputs a read request to the CPU 5 of the IC card 1, requesting for the image data stored in the storage area immediately preceding the first storage area.

In response to the read request supplied from the CPU 44, the CPU 5 of the IC card 1 designates the address of the 4A-sized storage immediately preceding the first storage area, reads the image data stored in the immediately preceding storage area, and supplies this image data, which represents an A4-size image, to the IC-card read section 48. In step ST38, the IC-cared read section 48 supplies the image data to the CPU 44. The CPU 44 stores this image data into the RAM 46 in step ST39. In step ST40, the display control section 45 controls the liquid-crystal panel 42, which displays the A4-size image represented by the image data stored in the RAM 46.

If NO in step ST35, that is, if the UP key 43c has not been pushed, the flow goes to step ST41. In step ST41, the CPU 44 determines whether or not the DOWN key 43d has been pushed. If YES, the flow goes to step ST42, in which the CPU 44 determines whether or not the liquid-crystal panel 42 is displaying the image represented by the data stored in the last storage area of the RAM 7. If YES in step ST42, the flow returns to step ST35. If NO in step ST42, the flow goes to step ST43. In step ST43, the CPU 44 outputs a read request to the CPU 5 of the IC card 1, requesting for the image data stored in the storage area immediately preceding the last storage area.

In response to the read request supplied from the CPU 44, the CPU 5 of the IC card 1 designates the address of the 4A-sized storage immediately preceding the last storage area, reads the image data stored in the immediately preceding storage area, and supplies this image data, which represents an A4-size image, to the IC-card read section 48. In step ST44, the IC-cared read section 48 supplies the image data to the CPU 44. The CPU 44 stores this image data into the RAM 46 in step ST45. In step ST46, the display control section 45 controls the liquid-crystal panel 42, which displays the A4-size image represented by the image data stored in the RAM 46.

Then, in step ST47, the CPU 44 determines whether or not the power switch 43a has been turned off. If NO, the flow returns to step ST35. If YES, the flow goes to step ST48, in which the CPU 44 determines that no more images need to be displayed, and causes the IC-card read section 48 to eject the IC card 1 through the IC-card slot 41a.

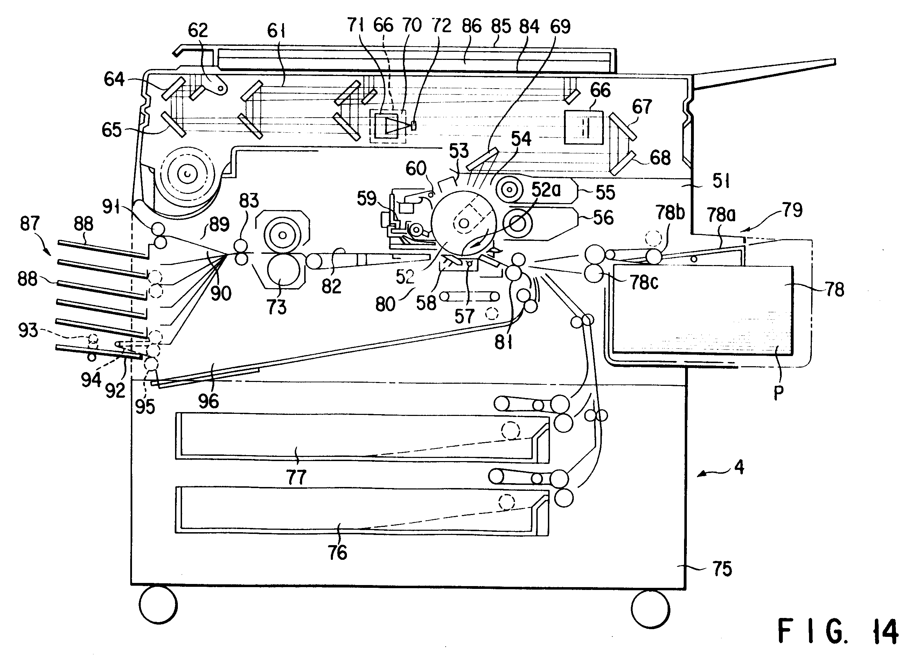

The copying machine 4, which is another component of the image-processing system, will now be described, with reference to Fig. 14.

The copying machine 4 comprises a housing 51 and a photosensitive drum 52 located in the center part of the housing 51. Arranged around the drum 52 in the clockwise direction are a charger 53, an exposure device 54, developing devices 55 and 56, a transfer charger 57, a paper-removing charger 58, a cleaner 59, and a discharger 60.

In the housing 51, an exposure unit 61 is located above the photosensitive drum 52. The unit 61 comprises an exposure lamp 62, first to third mirrors 63, 64 and 65, a magnification lens block 66, and fourth to sixth mirrors 67, 68, and 69. The lamp 62 and the first to third mirrors 63, 64 and 65 are mounted on a carriage (not shown) and can be moved together in horizontal direction. The carriage, the lamp 62, and the mirrors 63, 64 and 65 constitute a scanning section.

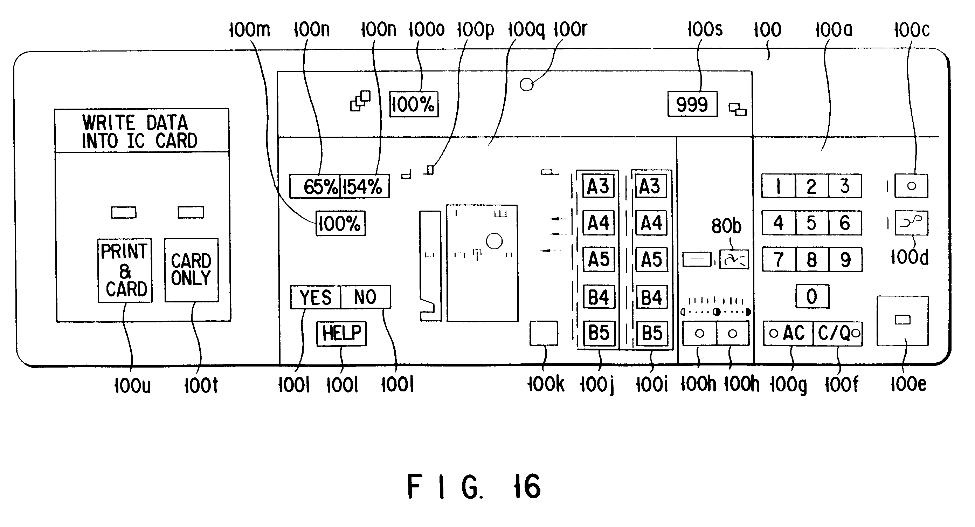

As is shown in Figs. 14 and 15, an image-reading section 70 is located near the magnification lens block 66. This section 70 comprises a lens 71 and a CCD 72. The lens 71 focuses the optical image read from the original, on the CCD 72. The CCD generates electric signals representing the optical image.

The housing 51 of the copying machine 4 is removably mounted on a disk 75. The disk 75 contains paper cassettes 76 and 77, which can be taken out at the front of the disk 75.

A large-capacity feeder (LCF) 78 is located at one side of the housing 51. The feeder 78 is partly contained in the housing 51. A manual paper-feeding section 79 is mounted on the top of the large-capacity feeder 78. A stack of paper sheets P having a specific size (e.g., A4 size), which are most commonly used, is placed in the feeder 78. The large-capacity feeder 78 has a top cover 78a, a pair of paper-feeding rollers 78b, and a pair of paper-pickup rollers 78c. The top cover 78a guides a paper sheet fed by hand at the manual paper-feeding section 79. The paper-feeding rollers 78b feed the paper sheet guided by the top cover 78a toward the photosensitive drum 52. The paper-pickup rollers 78c are used to take the topmost of the paper sheets P stacked in the large-capacity feeder 78.

Any paper sheet P supplied from the cassette 76, the cassette 77, the large-capacity feeder 78, or the manual paper-feeding section 79 is fed through a paper-feeding path 80 which extends within the housing 51 in a substantially horizontal direction. Along this path 80, there are provided a pair or register rollers 81, the transfer charger 57, the paper-removing charger 58, a conveyer belt 82, a fixing device 73, and a pair of paper-feeding rollers 83.

A platen plate 84 covers the top of the housing 51. A platen cover 85 is placed on the plate 84. A platen sheet 86 is bonded to the inner surface of the platen cover 85.

A sorter 87 is incorporated in the paper-ejecting side of the housing 51. The sorter 87 comprises a plurality of bins 88 and a gate 89. The bins 88 are arranged at regular intervals, placed one above another. The gate 89 is located between the paper-feeding rollers 83, on the one hand, and the corresponding one of the bins 88, on the other hand. The gate 89 comprises a flexible guide 90 and a pair of paper-ejecting rollers 91. The guide 90 can rotate, with one end fixed in position, and can expand and contract. The paper-ejecting rollers 91 are connected to the free end of the guide 90.

A paper-reversing tray 92 is located right below the lowermost of the bins 88. The gates 89 and the rotatable tray 92 constitute a continuous paper-reversing unit. A paper-reversing roller 93 and a paper-reversing gate 94 are mounted on the paper-reversing tray 92. The roller 93 can rotate clockwise and counterclockwise. An idle roller 95, which functions as a paper-feeding roller, is arranged below the pair of paper-ejecting rollers 91. When the gate 89 is rotated, bringing its free end to the lowermost position, the lower paper-ejecting roller 91 comes into rolling contact with the idle roller 95. Then, the lower paper-ejecting roller 91 and the idle roller 95 can cooperate to feed a paper sheet P onto a stacker 96.

The copying machine 4 operates as follows, to make a copy or copies of an original, without sorting the copies made.

The exposure unit 61 applies light to the original put on the platen plate 84. The light reflected from the original is focused onto the electrically charged surface of the photosensitive drum 52, thereby forming a latent electrostatic image on the surface of the drum 52. The developing device 55 or 56 applies developer to the surface of the drum 52, developing the latent image, or converting the latent image into a visible one. Meanwhile, a paper sheet P is fed into the gap 52a between the drum 52 and the transfer charger 57, from the cassette 76, the cassette 77, the large-capacity feeder 78, or the manual paper-feeding section 79. The visible image is thereby transferred from the drum 52 to the paper sheet P. The paper-removing charger 58 removes the paper sheet P from the photosensitive drum 52, which is transported to the fixing device 73 by means of the conveyer belt 82. The device 73 fixes the image on the paper sheet P. The sheet P, now with the image fixed on it, is supplied to the paper-feeding rollers 83. The rollers 83 feeds the sheet P onto the gate 89 of the sorter 87 which is located at its upper most position. The guide 90 of the gate 89 guides the paper sheet P forward, and the paper-ejecting rollers 91 of the gate 89 eject the paper sheet P onto the uppermost bin 88.

To make copies of an original document consisting of two or more pages, and to sort copy sheets into identical sets of copy sheets, the copying machine 4 operates as follows.

The exposure unit 61, the photosensitive drum 52, the developing device 55 or 56, the transfer charger 57, the paper-removing charger 58, the fixing device 73, and the conveyer belt 82 operate in the same way as described above, making a desired number of copies of any page of the document. The gate 89 of the sorter 87 is located first at its highest position. The paper-feeding rollers 83 feeds the first copy sheet P of the page is fed from the fixing device 73 to the gate 89. The guide 90 of the gate 89 guides the first copy sheet P toward the first bin 88, or the uppermost bin. The paper-ejecting rollers 91 eject the first copy sheet P onto the uppermost bin 88. Then, the gate 89 is rotated downwards to its second highest position. The paper-feeding rollers 83 feeds the second copy sheet P of the page is fed from the fixing device 73 to the gate 89. The guide 90 of the gate 89 guides the second copy sheet P toward the uppermost bin 88. The paper-ejecting rollers 91 eject the second copy sheet P onto the the second bin 88. Further, the gate 89 is rotated downwards to its third highest position, its fourth highest position, and so on, and the paper-feeding rollers 83, the guide 90, and the paper-ejecting rollers 91 perform their functions, thus supplying the third copy sheet, the fourth copy sheet, and so on, onto the third bin 88, the fourth bin 88, and so on.

To copy two consecutive pages of a document on the two sides of a paper sheet P, respectively, the copying machine 4 operates in the following way.

The gate 89 is rotated to its lowest position, and the paper-ejecting rollers 91 are brought into contact with the idle roller 95. Simultaneously, the paper-reversing roller 93 is lifted, and the paper-reversing gate 94 is rotated upwards, having its free end located at the nip between the paper-ejecting rollers 91. The paper-feeding rollers 83 feed a copy sheet P from the fixing device 73 to the gate 89. The guide 90 guides the sheet P downwards to the paper-ejecting rollers 91, which eject the sheet P onto the paper-reversing tray 92.

The paper-reversing roller 93 is lowered, while the roller 93 is rotated counterclockwise, until the roller 93 contacts the copy sheet P now placed on the tray 92. The moment the rear end of the copy sheet P leaves the paper-feeding rollers 83, the paper-reversing roller 93 is stopped, and the paper-reversing gate 94 is rotated downward. The roller 93 feeds the sheet P toward the idle roller 95, and the gate 94 guides the sheet P to the idle roller 95. As a result, the forward end of the sheet P is caught in the nip between the the idle roller 95 and the lower paper-ejecting roller 91. At this time, the roller 93 is lifted, and the gate 94 is rotated upwards.

The rollers 91 and 95 feed the copy sheet P onto the stacker 96. Soon after the roller 93 and the gate 94 have been lifted and rotated upwards, the the forward end portion of the next copy sheet P is plated on the paper-reversing tray 92, thus overlapping the rear end portion of the first copy sheet P now being fed onto the stacker 96. The first copy sheet P, which has an image formed on its one side, is fed to the drum 52 through the register rollers 81.

The copying machine 4 has an operation panel 100 on its top. As is shown in Fig. 16, the panel 100 has a ten-key pad 100a, an automatic exposure key 100b, a pre-heating key 100c, an interruption key 100d, a copy key 100e, a clear-stop key 100f, a all-clear key 100g, a density-setting key 100h, a sheet-size designating key 100i, an original-size designating key 100j, a cassette-selecting key 100k, an instruction-requesting key 1001, a 100%-magnification key 100m, two zooming keys 100n. The panel 100 also has a magnification display 100o, an original orientation display 100p, a function display 100q, an instruction display 100r, a copy number display 100s, a card-only key 100t, and a print-and-card key 100u.

The ten-key pad 100a consists of ten numeral keys, which an user of the image-processing system pushes to input the number of copies he or she wishes to make. The automatic exposure key 100b is depressed to set the machine 4 in automatic exposure mode. The interruption key 100c is pushed to interrupt copying operation. The copy key 100e is pushed to start or resume copying operation.

The clear-stop key 100f is depressed to change the number of copies to be made, or to stop copying operation. The all-clear key 100g is pushed to set the copying machine 4 in standard mode. The density-setting key 100h is operated to set a desired density in which images are to be copied. The sheet-size designating key 100i is operated to designate paper sheets of any desired size. The original-size setting key 100is operated to select one of the paper cassettes. The instruction-requesting key 100l is pushed, causing the instruction display 100r to display instructions which the user must observe in order to copy the original. The 100%-magnification key 100m is pushed to copy the original image in the same same size as the original image. The zooming keys 100n are pushed to copy the original image in the size reduced to 65% of the original image, and in the size increased to 154% thereof, respectively.

The magnification display 100o displays the magnification which the user has selected by pushing the key 100%-magnification key 100m, the 65%-magnification key 10n, or the 154%-magnification key 10n. The original orientation display 100p displays how the original is orientated on the platen plate 84. The function display 100q displays what function the copying machine 4 is performing. The instruction display 100r displays character information showing the steps which the user must perform to get a copy or copies of the original. The display 100r also displays character information representing the conditions of the machine 4. The copy number display 100s displays the number of copies to make, which the user has input by pushing the keys of the ten-key pad 100a.

The card-only key 100t is depressed so that data may be written into the IC card. The print-and-card key 100u is pushed so that data is not only copied but also written into the IC card 1.

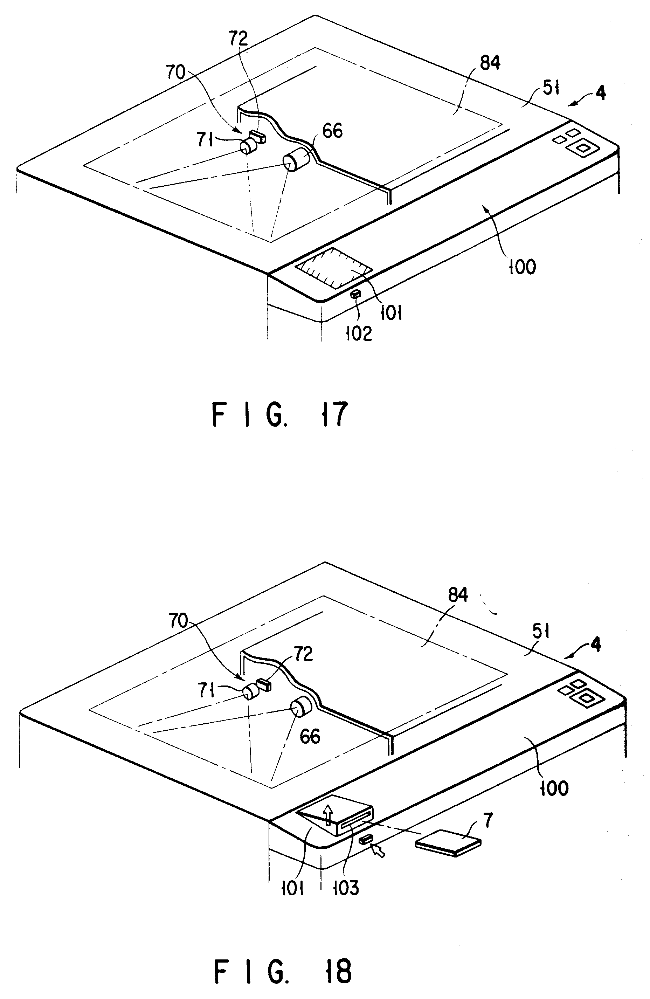

As is shown in Fig. 17, an IC-card holder 101 is arranged in the top surface of the copying machine 4 and is located beside the operation panel 100. A push button 102 protrudes from the front side of the copying machine 4 and is located close to the holder 101. When the user pushes this button 102, the holder 101 is rotated upwards, exposing its IC-card slot 103, as is shown in Fig. 18. Hence, the user can insert the IC card 1 into the holder 101 through the slot 103. Once placed within the holder 101, the IC card 1 is electrically coupled with an IC-card write section 113, which will be described later.

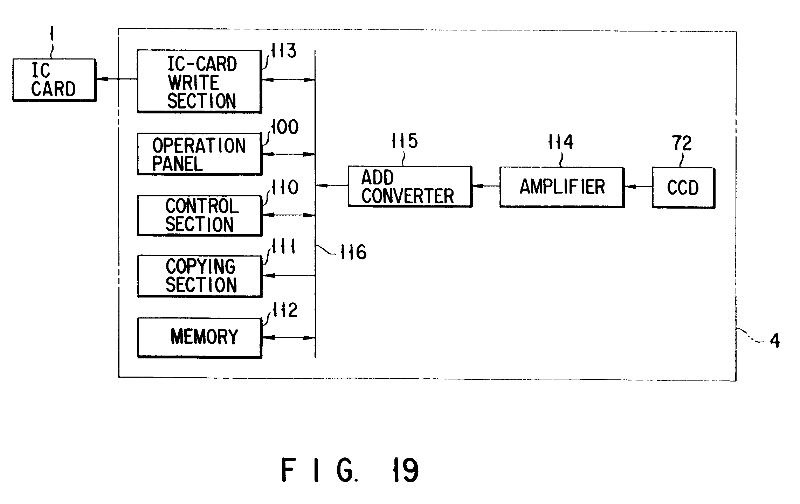

As is shown in Fig. 19, the copying machine 4 incorporates a control section 110, a memory 112, an IC-card write section 113, and a bus 116, in addition to the control panel 100 and the copying section 111 shown in Fig. 14. The bus 116 connects the control section 112 to the components 100, 111, 112, and 113. Hence, the section 112 can control these components, in accordance with the control programs stored in the memory 112. As has been explained, the control panel 100 is operated to input various operating conditions of the copying section 111. The memory 112 can store the image data which the image-reading section 70 has read from the original placed on the platen plate 84. The IC-card write section 113 writes the image data stored in the memory 112 into the CPU 5 incorporated in the IC card 1.

As is shown in Fig. 19, the CCD 72 is connected to the input of an amplifier 114. The output of the amplifier 114 is connected to the input of an A/D converter 115, whose output is connected to the bus 116.

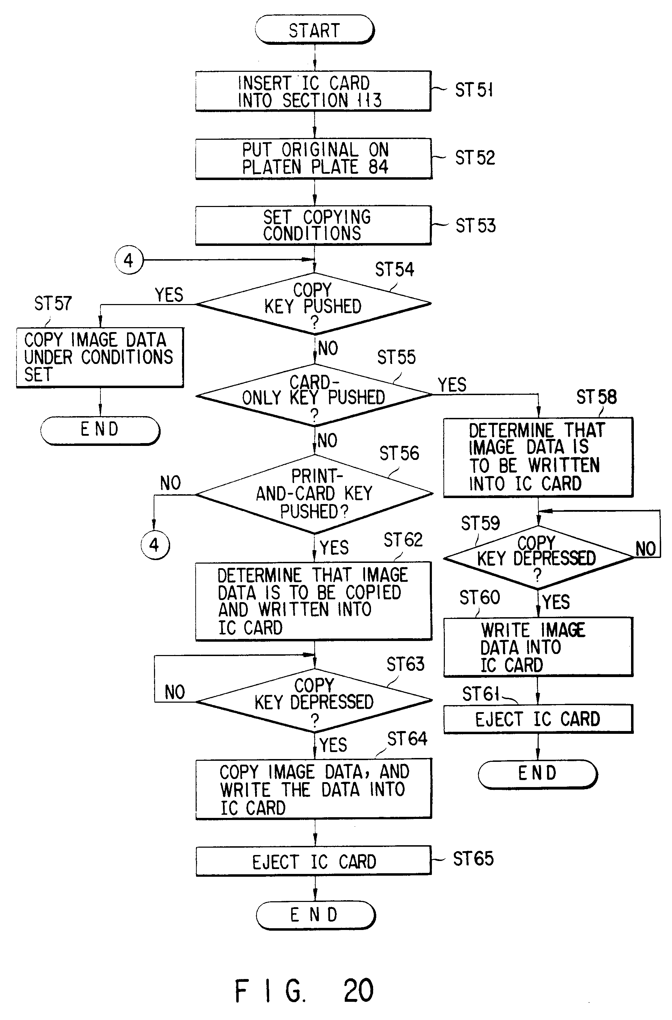

With reference to the flow chart of Fig. 20, it will now be explained how the copying machine 4 operates.

First, in step ST51, the user inserts the IC card 1 into the IC-card holder 101 through the IC-card slot 103. In step ST52, he or she puts an original on the platen plate 84. Next, he or she operates the operation panel 100 in step ST53, thereby setting various conditions in which to copy the originals.

Thereafter, in step ST54, the control section 110 determines whether or not the copy-only key 100e has been pushed. If NO, the flow goes to step ST55, in which the control section 110 determines whether or not the card-only key 110t has been depressed. If NO, the flows goes to step ST56. In step ST56, the control section determines whether or not the print-and-card key 100u has been pushed.

If YES in step ST54, that is, if the user has pushed the copy-only key 100e, the flow goes to step ST57. In step ST57, the control section 110 controls the copying section 111 in step ST57, whereby the section 111 performs ordinary copying operation. In this case, the IC card 1 need not be inserted in the IC-card write section 113.

If YES in step ST55, that is, if the user has pushed the card-only key 100t in step ST55, the control section 110 determines in step ST58 that the image data read from the original is to be written into the IC card 1. Next, in step ST59, the section 110 determines whether or not the copy key 100e has been depressed. If YES, the control section 110 controls the IC-card write section 113, whereby the image data read from the original is written into the IC card 1. Then, in step ST61, the control section 110 causes a card-ejecting mechanism (not shown) to eject the IC card 1 from the IC-card write section 113.

If YES in step ST56, that is, if the user has pushed the print-and-card key 100u, the flow goes to step ST62. In step ST62, the control section 110 determines that the image data read from the original is to be copied and written into the IC card 1. Then, in step ST63, the section 110 determines whether or not the copy key 100e has been depressed. If NO, step ST63 is repeated. If YES, the section 110 controls both the copying section 111 and the IC-card write section 113, whereby the image data is copied and written into the IC card 1. Next, in step ST65, the control section 110 causes the card-ejecting mechanism to eject the IC card 1 from the IC-card write section 113.

It will be explained in detail how the copying section 111 copies, in step ST57, the image formed on the original under the conditions set by operating the panel 100 of the copying machine 4.

First, the exposure unit 61 applies light to the original placed on the platen plate 84, thus scanning the original. The light reflected from the original is applied to the surface of the photosensitive drum 52, which is electrically charged by the charger 53. As a result, an electrostatic latent image is formed on the surface of the drum 52. The developing device 55 or 56 applies developer onto the surface of the drum 52, thereby changing the latent image into a visible image.

Meanwhile, a paper sheet P is supplied into the gap 52a between the drum 52 and the transfer charger 57, from the paper cassette 76, the paper cassette 77, the large-capacity feeder 78, or the manual paper-feeding section 79. The visible image is thereby transferred from the drum 52 to the paper sheet P.

Next, the paper-removing charger 58 removes the paper sheet P from the photosensitive drum 52. Then, conveyer belt 82 transports the sheet P to the fixing device 73. The fixing device 73 fixes the image on the paper sheet P. The sheet P, now with the image fixed on it, is supplied to the paper-feeding rollers 83. The rollers 83 feeds the sheet P onto the gate 89 of the sorter 87. The guide 90 of the gate 89 guides the paper sheet P forward, and the paper-ejecting rollers 91 of the gate 89 eject the paper sheet P onto the uppermost bin 88.

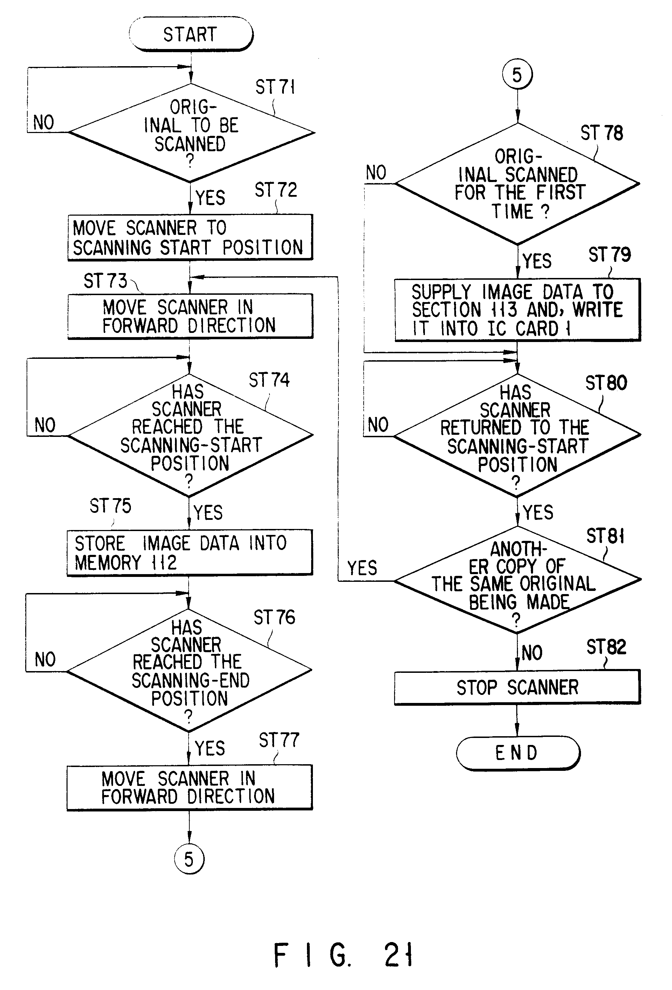

With reference to the flow chart of Fig. 21, it will now be described how the image data is written into the IC card 1 in step ST60.

First, in step ST71, the control section 110 determines whether the original is to be scanned or not. If NO, step ST71 is repeated. If YES, the flow goes to step ST72, in which the scanner (not shown) incorporated in the exposure unit 61 is moved to back to the scanning-start position. Next, in step ST73, the section 110 turns on the exposure lamp 62 and drives the scanner in forward direction. In step ST74, the section 110 determines whether or not the scanner has reached the forward end of the original placed on the platen plate 84. If NO, step ST74 is repeated. If YES, the control section 110 turns on the exposure lamp 62.

In step ST75, the light reflected from the original is applied via the lens 71 to the CCD 72. The CCD 72 converts the light into electric signals. The amplifier 114 amplifies these signals. The signals output by the amplifier 114, which are analog signals, are input to the A/D converter 115. The A/D converter 115 converts the analog signals into digital data representing the image formed on the original. The digital data is stored into the memory 112.

Thereafter, in step ST76, the control section 110 determines whether or not the scanner has reached the scanning-end position. If NO, step ST76 is repeated. If YES, the flow goes to step ST77, in which the section 110 turns off the exposure lamp 62 and drives the scanner toward the scanning-start position.

Next, in step ST78, the control section 110 determines whether or not the scanner has scanned the original for the first time. If NO in step ST78, the flow jumps to step ST80. If YES, the flow goes to step ST79, in which the image data stored in the memory 112 is supplied to the IC-card write section 113, whereby the section 113 writes the data into the IC card 1. In the IC card 1, the CPU 5 stores the image data is stored into the RAM 7. More specifically, the write request supplied from the CPU 33 sets the CPU 5 in the write mode, whereby the CPU 5 writes into the RAM 7 the image data the IC card 1 has received.

The CPU 5 determines whether or not the data received represents an A4-size image. If NO, the CPU 5 determines whether or not the image data has completely supplied from the IC-card write section 113. If NO, the CPU 5 writes image data into the RAM 7. If YES, the CPU 5 writes the signals representing white pixels into RAM 7 until the data stored in the RAM 7 comes to represent a complete A4-sized image. Thereafter, the CPU 5 sets the flag F of the next A4-sized storage area of the RAM 7 at the value of "0," whereby the flag F indicates that the image data written in the storage area is not associated with the data which will be stored in the next storage area.

If the CPU 5 determines that data received represents an image larger than an A4-size one, the flow goes to step ST80. In step ST80, the control section 110 determines whether or not the scanner has returned to the scanning-start position. If NO, the step ST80 is repeated. If YES, the flow goes to step ST81, in which the section 110 determines whether or not the same original is being copied. If YES in step ST81, the flow returns to step ST73. If NO in step ST81, the control section 110 stops the scanner in step ST82.

When the user pushes the print-and-card key 100u, the image on the original is copied in the way described above, while the data representing this image is being written into the IC card 1 in the manner described above.

To make two or more copies of an original, the image need not be read from the original two or more times, and the data representing the image need not be written into the IC card 1 repeatedly. It suffices to scan the original only once, thereby reading the image data therefrom, and to write the image data into the IC card 1 only once.

Both the copying operation and the IC card writing can be effected while the exposure unit 61 is moving in the forward direction. Alternatively, the copying operation can be performed while the unit 61 is moving in the forward direction, whereas the IC card writing is carried out while the unit 61 is moving in the backward direction.

As has been described, in the image-processing system according to the present invention, the image data read from an original document by means of the image-reading device 2 or the copying machine 4 is stored into the RAM 7 of the IC card 1, the IC card 1 is inserted into the display 3 which is connected to neither the image-reading device 2 nor the copying machine 4, and the display 3 displays the image represented by the data stored in the RAM 7.

Since the IC card 1 is far less expensive than an optical disk, and the read/write sections for reading data from, and write data into, the IC card 1 are far less expensive than an optical disk drive. Hence, the image-processing system can be much inexpensive than the optical filing system. Further, since the image data read from an original and stored in the IC card 1 can be displayed on the screen of the display 3, the original need not be copied by the copying machine 4, which helps to reduce the consumption of paper sheets and toner in the office. Moreover, since the image data can easily be erased from the IC card 1, if necessary for security reason, a shredder need not be used at all.

In addition, the image-reading device 2 can be dispensed with. This is because the optical section of the copying machine 4 can read image data from a document or a drawing. Without the device 2, the image-processing system will be less expensive than otherwise. Further, the machine 4 can read read image data faster than the image-reading device 2, and can enlarge and reduce the original image. Moreover, the machine 4 can write the image data read from an original, into the IC card 1, while producing a copy of the original.

Alternatively, the copying machine 4 can be dispensed with, if it is unnecessary to make copies of documents and if it is only necessary to read image data from documents, to record the data in IC cards 1, and to display the data. Without the copying machine 4, which is large and expensive and which has mechanical components such as paper-feeding mechanism, the image-processing system can be more compact, less expensive, and more reliable.

As has been described, the IC card 1 stores image data in units of A4-size image, no matter whether the data has been read from an A4-size original or from an original of a different size. Thus, the display 3 need not process the image data before displaying the image formed on the original.

Further, even if two or more copies of an original are to be made, the image data read from the original need not be written into the IC card 1 repeatedly. Obviously, this saves the storage area of the RAM 7 of the IC card 1.

If the operation is performed while the unit 61 of the copying machine 4 is moving in the forward direction, whereas the IC card writing is carried out while the unit 61 is moving in the backward direction, the image data can be written into the IC card 1 with high reliability.

The copying machine 4 can perform the copying operation and the IC-card writing operation, thus saving time. Since one and the same optical section serves to copy the original and write image data to the IC card 1, the copying machine 4 is less expensive than if it has another optical section designed only for either the copying operation or the IC-card writing operation.

The image data stored in the IC card 1 can easily be retrieved and displayed on the screen of the display 3. The display 3 is relatively thin and small, and can be put on a desk, just like books and folders, not occupying a large space.

## Claims

1.  An image-processing system characterized by comprising:

    an original table (84) for holding an original having an original image;

    means (52, 53, 55, 56, 57, 61, 73) for forming a copy image on a transfer material, which corresponds to the original image, said forming means (52, 53, 55, 56, 57, 61, 73) including means (53) for electrically charging a photosensitive member (52) uniformly, light applying means (61) for applying light to the original held on said original table (84) and for applying light reflected from the original to the photosensitive member (52) to form a latent image thereon, developer applying means (55, 56) for applying a developer to the photosensitive member (52) to develop the latent image, means (57) for transferring the developed image onto the transfer material (P), and means (73) for fixing the image transferred on the transfer material (P);

    means (1) for storing image data;

    means (72) for transducing the original image to the image data;

    means (113) for writing the image data into said storing means (1);

    means (113) for holding said storing means (1) detachably;

    means (100) for changing an operating mode, from a first mode in which said forming means (52, 53, 55, 56, 57, 61, 73) forms the image on the transfer material (P) to a second mode in which said writing means (113) writes the image data into said storing means (1) and vice versa;

    an image forming body (4) supporting said original table (84), said forming means (61), said transducing means (72), said writing means (113), said holding means (113), and said changing means (100), in the form of a single unit;

    means (48) for reading the image data stored in said storing means (1);

    means (42) for displaying an image represented by the image data read by said reading means (48); and

    a display body (3) for portably supporting said reading means (48) and said displaying means (42), in the form of a unit which is independent of said image forming body (4).

2.  A system according to claim 1, characterized in that said forming means (52, 53, 55, 56, 57, 61, 73) forms an image on the transfer material (P), and which further comprises means for storing the image data to be written by said writing means (113) into said storing means (1).

3.  A system according to claim 1, characterized in that said storing means (1) is an IC memory, and said displaying means (42) has means (49) for detecting an insertion of the IC memory.

4.  A system according to claim 3, characterized in that said displaying means (42) starts displaying the image data upon detecting the insertion of the IC memory (1).

5.  A system according to claim 1, characterized in that said displaying means (42) has means for displaying at least one part of the image formed on an original which is larger than a predetermined size.

6.  A system according to claim 1, characterized in that said display body (3) has a reduction key (43e), a 100% magnification key (43f), and an enlargement key (43g).

3

| DISPLAY |

5

| CPU |

6

| ROM |

2

| IMAGE-READING DEVICE |

7

| RAM |

8

1

4

| COPYING MACHINE |

IC CARD

# F I G. 1

FIRST PAGE

F | DATA OF A4-SIZE IMAGE

SECOND PAGE

F | DATA OF A4-SIZE IMAGE

F |

7

nTH PAGE

F | DATA OF A4-SIZE IMAGE

# F I G. 2

F I G. 3

F I G. 4

DISTANCE THE CARRIAGE CAN MOVE

F I G. 5

F I G. 6

FIG. 7

FIG. 8

START

ST1 INSERT IC CARD

ST2 PUT ORIGINAL ON PLATE 12

ST3 READ-START SWITCH TURNED ON ?
NO

YES

ST4 MOVE CARRIAGE

ST5 CONVERT LIGHT BEAMS INTO ELECTRIC SIGNALS

ST6 CONVERT SIGNALS INTO DIGITAL SIGNALS

ST7 STORE REFLECTION REFERENCE DATA INTO MEMORY

ST8 CORRECT IMAGE SIGNAL IN ACCORDANCE WITH THE REFLECTION REFERENCE DATA, AND SUPPLY CORRECTED SIGNAL, AS IMAGE DATA, TO IC CARD

1

ST9 STORE THE IMAGE DATA INTO THE RAM OF IC CARD

ST10 A4-SIZE IMAGE DATA RECEIVED ?
YES

NO

ST14 SET FLAG F OF THE NEXT STORAGE AREA AT "1"

1

ST11 DATA COMPLETELY TRANSFERRED ?
NO 1

YES

ST12 STORE WHITE-PIXEL SIGNALS INTO RAM 7 UNTIL THE DATA STORED IN RAM 7 REPRESENTS A COMPLETE A4-SIZE IMAGE

ST13 SET FLAG F OF THE NEXT STORAGE AREA AT "0"

ST15 PULL IC CARD OUT OF IC CARD SLOT

END

FIG. 9

16

F I G.  10

F I G.  15

FIG. 11

# F I G. 12

EP 0 492 579 A2

START

ST21
POWER SWITCH ON ? — NO

ST21 YES
INITIALIZE SYSTEM

ST23
DISPLAY "WAIT"

ST24
IC CARD INSERTED? — NO

ST25 YES
OUTPUT IMAGE DATA READ REQUEST TO IC CARD

ST26
SUPPLY IC CARD READ SECTION WITH THE IMAGE DATA STORED IN THE FIRST STORAGE AREA AND THE FLAG OF THE STORAGE AREA FOLLOWING THE NEXT

ST27
STORE THE IMAGE DATA INTO RAM 46

ST28
DISPLAY THE IMAGE

3

ST29
SCREEN-SWITCHING KEY PUSHED ? — NO — 2

YES

ST30
IMAGE DATA ASSOCIATED WITH THE DATA IN THE NEXT STORAGE AREA ? — NO — 3

ST31 YES
OUTPUT A READ REQUEST TO IC CARD

ST32
SUPPLY IC CARD READ SECTION WITH THE IMAGE DATA STORED IN THE NEXT STORAGE AREA AND THE FLAG OF THE STORAGE AREA FOLLOWING THE NEXT

ST33
STORE INTO RAM 46 THE IMAGE DATA STORED IN THE NEXT STORAGE AREA

ST34
DISPLAY THE IMAGE

3

F I G. 13A

20

ST 35 — UP KEY PUSHED? — NO
YES
ST 36 — FIRST PAGE BEING DISPLAYED? — YES
NO
ST 37 — OUTPUT READ REQUEST TO IC CARD, REQUESTING FOR THE IMAGE DATA STORED IN THE STORAGE AREA PRECEDING THE FIRST STORAGE AREA
ST 38 — SUPPLY IC CARD READ SECTION WITH THE DATA STORED IN THE STORAGE AREA PRECEDING THE FIRST STORAGE AREA
ST 39 — STORE THE IMAGE DATA INTO RAM 46
ST 40 — DISPLAY IMAGE
ST 47 — POWER SWITCH TURNED OFF? — NO
YES
ST 48 — EJECT IC CARD
END

ST 41 — DOWN KEY PUSHED? — NO
YES
ST 42 — LAST PAGE BEING DISPLAYED? — YES — 2
NO
ST 43 — OUTPUT READ REQUEST TO IC CARD, REQUESTING FOR THE IMAGE DATA STORED IN THE STORAGE AREA PRECEDING THE LAST STORAGE AREA
ST 44 — SUPPLY IC CARD READ SECTION WITH THE DATA STORED IN THE STORAGE AREA PRECEDING THE LAST STORAGE AREA
ST 45 — STORE THE IMAGE DATA INTO RAM 46
ST 46 — DISPLAY IMAGE

F I G. 13B

FIG. 14

F I G. 16

F I G.  17

F I G.  18

F I G. 19

EP 0 492 579 A2

START

INSERT IC CARD
INTO SECTION 113 — ST51

PUT ORIGINAL ON
PLATEN PLATE 84 — ST52

SET COPYING
CONDITIONS — ST53

④ → ST54

ST57
YES ← COPY KEY PUSHED ?

COPY IMAGE DATA
UNDER CONDITIONS
SET

END

↓NO

ST55
CARD-ONLY KEY PUSHED ? — YES →

↓NO

ST58
DETERMINE THAT
IMAGE DATA IS
TO BE WRITTEN
INTO IC CARD

ST56
NO ← PRINT-AND-CARD KEY PUSHED ?

④

↓YES ST62

DETERMINE THAT IMAGE
DATA IS TO BE COPIED
AND WRITTEN INTO
IC CARD

ST59
COPY KEY DEPRESSED ? — NO

ST63
NO ← COPY KEY DEPRESSED ?

ST60
↓YES
WRITE IMAGE
DATA INTO
IC CARD

ST61
EJECT IC CARD

END

↓YES ST64
COPY IMAGE DATA, AND
WRITE THE DATA INTO
IC CARD

EJECT IC CARD — ST65

END

F I G.  20

START

ST 71
ORIG-
INAL TO BE
SCANNED
?
NO
YES ST 72

MOVE SCANNER TO
SCANNING START POSITION

ST 73
MOVE SCANNER IN
FORWARD DIRECTION

ST 74
HAS
SCANNER
REACHED THE
SCANNING-START
POSITION
?
NO
ST 75 YES

STORE IMAGE DATA INTO
MEMORY 112

ST 76
HAS
SCANNER
REACHED THE
SCANNING-END
POSITION
?
NO
YES ST 77

MOVE SCANNER IN
FORWARD DIRECTION

5

5

ST 78
ORIG-
INAL SCANNED
FOR THE FIRST
TIME ?
NO
YES ST 79

SUPPLY IMAGE DATA TO
SECTION 113 AND, WRITE
IT INTO IC CARD 1

ST 80
HAS
SCANNER
RETURNED TO THE
SCANNING-START
POSITION
?
NO
YES

ST 81
ANOTH-
ER COPY OF
THE SAME ORIGINAL
BEING MADE
?
YES
NO ST 82

STOP SCANNER

END

F I G. 21